Europäisches Patentamt

European Patent Office

Office européen des brevets

(11) Veröffentlichungsnummer: **0 316 754 B1**

(12) **EUROPÄISCHE PATENTSCHRIFT**

(45) Veröffentlichungstag der Patentschrift: **06.05.92**

(51) Int. Cl.⁵: **B65D 43/06**

(21) Anmeldenummer: **88118704.1**

(22) Anmeldetag: **10.11.88**

Teilanmeldung 90125835.0 eingereicht am 10/11/88.

(54) **Metallbehälter.**

(30) Priorität: **13.11.87 US 120471**

(43) Veröffentlichungstag der Anmeldung:
**24.05.89 Patentblatt 89/21**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
**CH-A- 546 674**
**GB-A- 2 119 343**
**US-A- 1 434 831**
**US-A- 3 878 963**

(73) Patentinhaber: **Van Dorn Company**
**2700E 79th Street**
**Cleveland Ohio 44104(US)**

(72) Erfinder: **Gallagher, Thomas A.**
**8534 Tanglewood Trail**
**Chagrin Falla OH 44022(US)**
Erfinder: **Knowlton, Paul**
**7718 W. 161st Street**
**Tinley Park IL 60477(US)**
Erfinder: **Patarini, Leon M.**
**11250 Moraine Drive**
**Palos Hills IL 60465(US)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach Kaiser-**
**Wilhelm-Ring 24 Postfach 190 408**
**W-5000 Köln 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.18/2.0)

**Beschreibung**

Die Erfindung betrifft einen Metallbehälter mit abnehmbarem Deckel und einem kreisförmigen Boden, einem mit dem Boden verbundenen zylindrischen Körperteil und einem hieran anschließenden verformten Randteil, in dem die Behälteröffnung angeordnet ist, die einen gerollten Wulstrand hat, über welchen der Deckel mit einer U-förmigen Verschlußnute greift, die von einer inneren Dichtwand, einer äußeren Dichtwand und von einer diese verbindenden Einbuchtungswand begrenzt wird.

Metallbehälter dieser Art sind besonders geeignet für Farben, Lacke, Beizen u.dgl., die an Endverbraucher verkauft werden, und die Erfindung wird unter besonderer Bezugnahme auf solche Behälter beschrieben. Fachleute werden jedoch erkennen, daß die Erfindung ein breiteres Anwendungsgebiet hat und der Metallbehälter auch als luftdichter Behälter für irgend eine Flüssigkeit oder eine andere Substanz verwendet werden kann, die ein wiederholtes Öffnen und Verschließen des Behälterdeckels erfordert.

Die üblichen Metallbehälter, insbesondere Farbbehälter od. dgl., die für Endverbraucher bestimmt sind und eine zylindrische Form haben, bestehen üblicherweise aus einem Behälterkörper, einer Bodenplatte, die ein Ende des Behälters verschließt, einem Ring, der am offenen Ende des Behälters befestigt ist und aus einem Deckel oder einem Stopfen, der in den Ring paßt und den Behälter verschließt. Hierzu kann auf das Patent US-A-4 421 247 von Lombardo at all als typisches Beispiel verwiesen werden, welches die Stopfen- und Ringkonstruktion und den Sitz zwischen diesen beiden Teilen zeigt.

Der zylindrische Behälterkörper wird gewöhnlich aus einem rechteckigen, flachen Stück Blech geformt, das zu einem Zylinder gerollt wird, wobei die Längsseiten durch eine kontinuierliche Seitenlötnaht miteinander verbunden werden. Danach wird eine kreisförmige Bodenplatte, gewöhnlich durch einen umgebördelten Doppelfalz an einem der offenen Enden des Zylinders befestigt. Am anderen Ende des Zylinders wird ein mit einer Nute versehener Ring in ähnlicher Weise befestigt. Hierbei können verschiedene Arten von Falzen Verwendung finden. Manche Behälter werden auch einstückig tiefgezogen oder -gepreßt.

Es ist ein Metallbehälter der eingangs näher erläuterten Art bekannt (CH-A-546 674), der im oberen Teil des zylindrischen Körpers eingezogen ist, so daß sich der Innendurchmesser des Behälters von seiner Öffnung aus verkleinert. Der eingezogene Teil bildet mit dem sich anschließenden, unteren, zylindrischen Körperteil eine radial nach innen sich erstreckende Schulter, auf die ein Werkzeug zum Öffnen des Deckels angesetzt werden kann, der außen über den oberen Rand des Behälters greift.

Diese eingezogene Rille oder Schulter hat den Nachteil, daß sich der obere Rand des Behälters verformt und sich nach außen wölbt, wenn der Behälter in Axialrichtung gestaucht wird. Dies kann beispielsweise dann geschehen, wenn der Behälter zu Boden fällt und dort einseitig mit einer Kante auftrifft. Durch die Auswölbung der Behälterwandung in der Nähe des oberen Behälterrandes wird leicht der Deckel aufgesprengt, so daß der Inhalt aus dem Behälter ausfließen kann.

Der bekannte Behälter hat ferner den Nachteil, daß der über den gerollten Wulstrand des Behälterkörpers greifende Deckel mit seinem Außenrand über den zylindrischen Außenumfang des Metallbehälters vorsteht. Hierdurch wird verhindert, daß der bekannte Metallbehälter auf der Seite liegend nicht längs eines geraden Weges rollen kann, vielmehr kann der bekannte Behälter immer nur einen gebogenen Weg zurücklegen, da der Außenumfang des auf den Behälter aufgesetzten Deckels größer ist als der Außenumfang des mit dem Boden versehenen, anderen, geschlossenen Behälterrandes. Schließlich ist der bekannte Metallbehälter auch nicht stapelbar.

Es gibt zwar auch stapelbare Metallbehälter (US-A-3 878 963), die einen eingezogenen Boden haben, aber am oberen, offenen Rand des Behälters einen zusätzlichen Ring benötigen, der mit einer umlaufenden Verschlußleiste versehen ist, die von dem mit einer entsprechenden Nute versehenen Rand des Deckels übergriffen wird. Derartige, mit einem Öffnungsring versehene Metallbehälter erfordern einen erhöhten Herstellungsaufwand und lassen sich praktisch nicht vollständig entleeren.

Es gibt auch bereits ringlose Behälter, die stapelbar sind (GB-A-2 119 343). Diese bekannten Behälter haben aber keinen zylindrischen, sondern einen sich zum geschlossenen Boden hin verjüngenden Behälterkörper. Der Boden ist eingezogen und greift mit seinem umlaufenden Außenrand beim Stapeln der Behälter in eine Ringnute des Deckels des darunter angeordneten Behälters ein.

Derartige Behälter lassen sich nicht sicher stapeln, da sie nur mit einem schmalen Rand in einer verhältnismäßig breiten Vertiefung des Deckels des darunter angeordneten Metallbehälters stehen. Sie haben außerdem Dichtprobleme, wenn sie nicht tiefgezogen, sondern aus einem Blech gerollt sind, dessen Längsränder dann miteinander verlötet werden. Da jeder Längsrand des Behälters U-förmig ausgebildet wird und die Enden der Längsränder miteinander verhakt, umgebogen und verlötet werden, ist der Lötfalz viermal so dick wie das Metallblech. Im Bereich des oberen Randes, in welchen der Deckel eingreift, muß dann die Nahtstelle besonders bearbeitet werden.

Die ringlosen, bekannten Ausführungen sind für heutige Farbbehälter nicht geeignet. Einmal sind heutige Farbbehälter in ihren Abmessungen innerhalb gewisser Grenzen standardisiert. Jede neu geformte Dose, die kommerziell erfolgreich sein soll, muß mit den bestehenden Fabrikationseinrichtungen und mit den vorhandenen Füllstationen kompatibel sein. Ferner sind die Prüfbedingungen für heutige Farbbehälter sehr streng. Eigentümlich für die Verwendung als Farbbehälter ist die Kraft, die im Behälter an verschiedenen Bereichen um die Innenseite des Deckels herum von der im Inneren des Behälters befindlichen Farbe oder der Flüssigkeit entwickelt wird und die zur Folge hat, daß der Deckel aufgesprengt wird, wenn der Farbbehälter zu Boden fällt oder wenn auf eine Seite des Behälters ein Stoß ausgeübt wird, beispielsweise wenn der Behälter in eine Ettikettiermaschine oder in einen Schüttelapparat einläuft oder anderweitig einer allgemeinen, vollständig vorschriftswidrigen Behandlung unterworfen wird. Im allgemeinen wirken ungleichmäßige Kräfte so, daß sie bei den herkömmlichen, ringlosen Behälterformen den Deckel lockern und hierdurch die luftdichte Abdichtung verletzen, die anfänglich hergestellt wurde, als der Deckel auf den Behälter aufgesetzt wurde. Dies kommt hauptsächlich daher, daß es bei solchen Ausführungen nur zwei ringförmige Dichtbereiche gibt. Dies führt zu einem Festsitz, der im Vergleich zu dem bei dem Ring-Deckelverschluß hergestellten Sitz unzureichend ist. Außerdem wird die Abdichtung des Behälters besonders schwierig, wenn der Deckel über eine Lötnaht schnappen muß, die sich bis zur Maulöffnung des Behälters erstreckt. Außerdem hat die heutige Farbenindustrie neben dem Stoßtest andere Tests entwickelt, denen die bisherigen Behälterformen zu der Zeit, als sie entwickelt wurden, nicht unterworfen wurden und die wahrscheinlich von solchen Behältern heute nicht bestanden werden würden.

Aufgabe der Erfindung ist es, einen Metallbehälter der eingangs näher erläuterten Art zu schaffen, der als Farbbehälter verwendbar ist und bei dem der Deckel immer wieder dicht aufgesetzt werden kann und bei dem ein Aufspringen des Deckels auch dann verhindert wird, wenn der Behälter zu Boden fällt und schräg auf einen Rand auftrifft.

Diese Aufgabe wird mit der Erfindung dadurch gelöst, daß der verformte Randteil ein kegelstumpfförmiges Segment aufweist, das sich radial nach innen zur Behälteröffnung hin verjüngt und mit Versteifungsmitteln versehen ist.

Das kegelstumpfförmige Segment verleiht dem Randteil eine gewisse Biegsamkeit, die es ermöglicht, daß die Stoßkräfte durch elastische Verformung weitgehend aufgezehrt werden, wenn der Behälter zu Boden fällt und auf eine seiner Kanten auftrifft. Durch die Bewegung des kegelstumpfförmigen Randteiles ändert sich das Innenvolumen des geschlossenen Behälters praktisch nicht und die Dichtung wird auch dann aufrechterhalten, wenn sich die Flüssigkeit im Behälter gegen die Innenfläche des Deckels bewegt. Gleichzeitig sorgen die Versteifungsmittel im verformten Randteil dafür, daß die Behälterseitenwand nicht zusammengedrückt wird und der gerollte Wulstrand sich nicht ausbiegen kann, wenn der Deckel auf den Behälter gesetzt wird oder der Behälter auf seinen Deckel fallen sollte.

Besonders zweckmäßig ist es, wenn das kegelstumpfförmige Segment als Versteifung mindestens zwei Vorsprünge aufweist, wobei das Segment zwischen den Vorsprüngen kegelstumpfförmige Wandteile aufweisen kann, die unter einem Winkel von etwa 30° im wesentlichen parallel zueinander verlaufen. Der erste Vorsprung kann dann als Anschlag oder Führungsmittel zum Eingrenzen eines auf den Körperteil des Behälters anzubringenden Etikettes wirken, während der zweite Vorsprung als Widerlager für einen plattigen Gegenstand dienen kann, der zwischen dem Dekkel und dem Behälter eingeführt wird, um den Deckel vom Behälter abzuheben.

Die miteinander verbundenen Ränder des Bodens und der Seitenwandung des zylindrischen Körperteiles bilden zweckmäßig einen über den Außenumfang des Körperteiles radial vorspringenden Falz, während einer der Vorsprünge des kegelstumpfförmigen Segments um den gleichen Betrag über den Außenumfang radial vorspringt und der äußere Umfangsrand des Deckels um einen Betrag radial nach außen über den Außenumfang vorspringt, der nicht größer ist als der des Vorsprunges am kegelstumpfförmigen Segment. Hierdurch wird erreicht, daß der Behälter, auf der Seite liegend in einer geraden Richtung rollen kann, so daß Papier- oder papierartige Etiketten durch einfaches Rollen des Behälters in den Führungen von üblichen Etikettiermaschinen auf den Behälter aufgebracht werden können.

Der Behälter wird zweckmäßig aus Blech gewalzt, wobei seine Seitenwandung einen durch Widerstandsschweißung erzeugten, sich in Längsrichtung erstreckenden, durchlaufenden Seitenfalz aufweist, dessen Dicke kleiner ist als die doppelte Dikke der Seitenwand. Ein derartiger, durch Widerstandsschweißung erzeugter Seitenfalz, der nur eine sehr geringe Dicke aufweist, erlaubt es, den Rand der Öffnung des Behälters zu einem Wulst nach außen zu rollen und auch im Bereich des Seitenfalzes mit dem übergestülpten Deckel einen sicheren und dauernd dichten Verschluß herbeizuführen, da die Kanten der übereinanderliegenden Falzränder beim Widerstandsschweißen praktisch verschwinden und auch im Bereich des Falzes unter dem Druck des eingepreßten Deckels eine praktisch glatte Fläche entsteht.

Die Bodenwand des Behälters hat zweckmäßig eine ringförmige Nute, deren nach einem umgekehrten U geformte Vertiefung geringfügig größer ist als die nach einem umgekehrten U geformte Verschluß-Nute im Deckel. Die Behälter können dann mit oder ohne an ihnen befestigtem Deckel reihenweise übereinander gestapelt werden. Hierbei kann der Durchmesser der äußeren Dichtwand des Deckels geringfügig kleiner sein als der Innendurchmesser des Bodens. Die Behälter können dann reihenweise einen über den anderen derart gestapelt werden, daß die Einbuchtungswand des Deckels des Bodens in die Vertiefung eingreift.

Bei einer besonderen Ausführungform kann die äußere Dichtwand des Deckels eine radial nach innen geformte Eindrückung aufweisen, welche den Wulstrand des Behälters hintergreifen kann, wenn der Deckel auf dem Behälter in Stellung gebracht wird und einschnappt und wodurch der Durchmesser des Wulstrandes geringfügig verkleinert wird.

Besonders zweckmäßig ist es, wenn die innere Dichtwand des Deckels in einer kontinuierlichen Dichtverbindung mit dem Dichtsegment des Behälters steht, das sich an das kegelstumpfförmige Segment des Behälters unmittelbar anschließt und das sich in den Wulstrand des Behälters fortsetzt. Der Behälter erlangt dann in unmittelbarer Nähe seiner von dem Deckel verschließbaren Öffnung eine besonders hohe Stabilität und Festigkeit.

Der Metallbehälter mit diesen Merkmalen kann auf bestehenden, konventionellen Maschinen gefüllt, mit dem Deckel verschlossen und auf einer Seitenwand etikettiert werden.

Die Erfindung wird durch die nachfolgende Beschreibung und die Zeichnungen näher beschrieben, die einen Teil der Erfindung wiedergeben und worin

Fig. 1     eine schematische Schnittdarstellung des Deckels und eines ringlosen Behälters nach der Erfindung ist;

Fig. 2     eine auseinandergezogene Darstellung ist, die den Randteil des Behälters nach der Erfindung im Querschnitt zeigt;

Fig. 3     eine der Fig. 2 ähnliche Darstellung ist, die jedoch den Deckel in einer auf dem Kontainer in Stellung gebrachten Lage zeigt, und wobei

Fig. 4     eine Abwandlung der bevorzugten Ausführungsform nach der Erfindung darstellt.

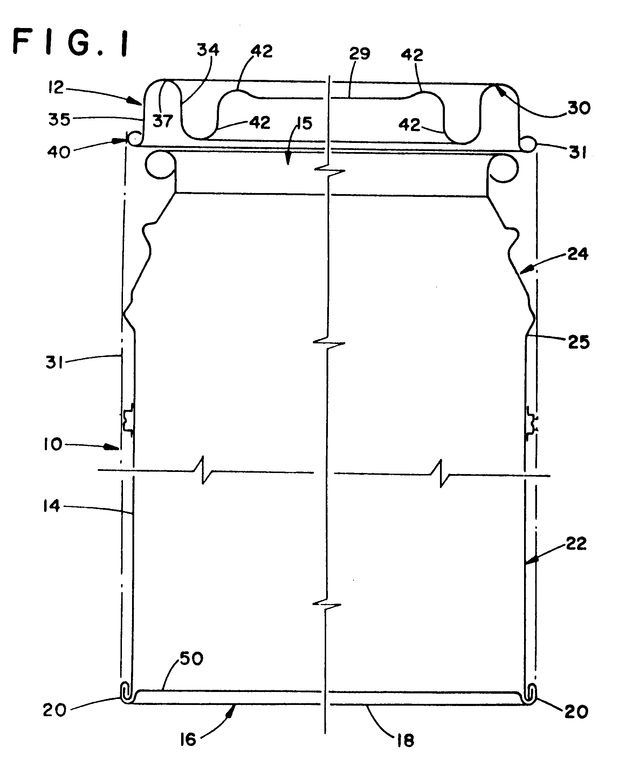

Wendet man sich jetzt den Zeichnungen zu, deren Darstellungen nur den Zweck haben, eine bevorzugte Ausführungsform der Erfindung zu erläutern, nicht aber die Erfindung zu beschränken, so zeigt Fig. 1 eine schematische Schnittdarstellung eines ringlosen Containers oder Behälters 10 und eines Deckels 12, der geeignet ist, am Behälter 10 befestigt zu werden. Der Behälter 10 und der Deckel 12 werden aus einem verzinnten Blech hergestellt, das bei verschiedenen Temperaturen und in verschiedenen Arbeitsgängen vergütet wird, um ihm die gewünschten physikalischen Eigenschaften zu verleihen. In der Farbindustrie wird die Metalldicke in Pfund angegeben und Behälter werden typischerweise aus Metall mit einer Dicke von 0,4 - 0,7 mm (65 - 110 Lbs). hergestellt, wobei die schwereren Bleche für größere Container und leichtere Bleche für kleinere Behälter verwendet werden. Für den als bevorzugtes Beispiel dargestllten Behälter mit einem Fassungsvermögen von 3,8 l (einer Gallone) beträgt die Dicke 0,5 mm (85 Lbs). Diese Dicke ergibt eine gute Elastizität für die Dichteigenschaften der vorliegenden Erfindung.

Der Behälter 10 hat eine Seitenwand 14 mit einem offenen Ende 15 und einem geschlossenen Ende 16, das von einer Bodenwand 18 gebildet wird, die mit Hilfe eines konventionellen Doppelfalzes 20 am geschlossenen Ende 16 der Seitenwand 14 befestigt ist. Für Zwecke der besseren Erläuterung kann die Seitenwand 14 so definiert werden, daß sie aus einem zylindrischen Körperteil 22 und einem kegelstumpfförmigen Randteil 24 besteht. Der zylindrische Körperteil 22 beginnt am geschlossenen Ende 16 der Seitenwand 14 und endet am Anfang 25 des kegelstumpfförmigen Randteiles 24, der seinerseits am offenen Ende 15 der Seitenwand 14 endet.

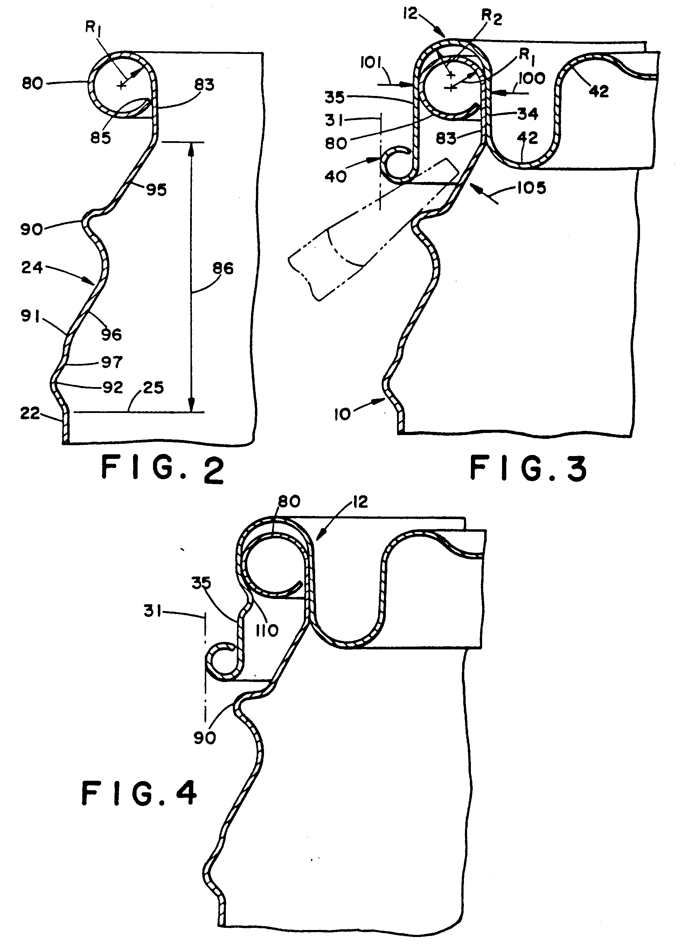

In den Fig. 1 und 3 besteht der Deckel 12 aus einer im wesentlichen kreisförmigen Platte, die mit einem geeigneten Werkzeug in die dargestellte Form gepreßt ist. Mehr im einzelnen hat der Deckel 12 einen im wesentlichen flachen Grundteil 29 und eine ringförmige Dichtnute 30, die neben dem Umfangsrand 31 des Deckels 12 ausgebildet ist. Die Dichtnute 30 ist mehr im einzelnen durch eine sich in Längsrichtung erstreckende innere Dichtwand 34 und eine sich in Längsrichtung erstreckende äußere Dichtwand 35 definiert, die durch eine gekrümmte Einbuchtungswand 37 miteinander verbunden sind. Die Einbuchtungswand 37 wird nach einem vorher bestimmten Radius geformt, der in der Darstellung mit R2 bezeichnet ist und weiter unten noch näher erläutert werden wird. Es ist darauf hinzuweisen, daß die innere Dichtwand 34, die Einbuchtungswand 37 und die äußere Dichtwand 35 eine nach einem umgekehrten U geformte Nute bilden. Der Umfangsrand 31 des Deckels 12 ist gerollt und bildet einen Wulst 40, der als Hebelansatzpunkt zum Entfernen des Deckels 12 vom Behälter 10 dient.

Wie aus der Zeichnung hervorgeht, fluchtet der Umfangsrand 31 des Deckelwulstes 40 auch in Längsrichtung mit der Außenkante des Bodendoppelfalzes 20. Ferner ist wichtig, daß der Wulst 40 so nach innen gerollt ist, daß der Behälter 10 mit aufgesetztem Deckel 12 in einer geraden Linie rollen kann, damit auf gefüllte Behälter 10 Papieretiketten mit konventionellen Etikettiermaschinen aufgebracht werden können. Neben der Dichtnute 30 befindet sich eine Versteifungsnute 42. In dem Deckel 12 können mehrere Versteifungsnuten 42 derart angeordnet sein, daß der im allgemeinen flache Basisteil 29 des Deckels 12 versteift wird. Vorzugsweise wird jedoch nur eine Versteifungsnute 42 vorgesehen, damit der Deckel 12 eine gewisse Biegsamkeit behält.

Wendet man sich jetzt der Fig. 1 zu, so erkennt man, daß der Boden 18 neben dem Doppelfalz 20, typischerweise um 3 mm (1/8″), eingedrückt ist, um eine ringförmige Sitzwandung 50 zu schaffen, die einen Durchmesser hat, der vorzugsweise annähernd ebenso groß wie der Innendurchmesser des zylindrischen Körperteiles 22 des Behälters 10 ist. Der Durchmesser der Sitzwandung 50 und der Durchmesser der äußeren Dichtungswand 35 des Deckels 12 sind so aufeinander abgestimmt, daß der Deckel 12 dicht in die Bodenplatte 18 eines darübergestapelten Behälters eingreift. Die verhältnismäßig große Umfangsfläche der Sitzwandung 50 schafft eine gute Rückhaltefläche, um serienweise übereinandergestapelte Container sicherer festzuhalten, als dies notwendigerweise dann der Fall wäre, wenn eine Sitzwandung mit kleinerem Durchmesser verwendet worden wäre. Eine Sitzwandung mit bemerkenswert kleinerem Durchmesser würde beispielsweise dann vorhanden sein, wenn ein konventioneller Ringbehälter mit Stopfen so abgewandelt werden würde, daß eine ähnliche Vertiefung für Stapelzwecke entsteht.

Die Seitenwand 14 wird aus einer rechteckigen Blechplatte in die in Fig. 1 dargestellte zylindrische und kegelstumpfförmige Form gewalzt, nicht gezogen. Die sich längs erstreckenden Ränder der flachen Platte werden in einem Längsfalz, der in den Zeichnungen nicht dargestellt ist, miteinander verbunden, der sich vom Boden 18 bis zum offenen Ende 15 des Behälters 10 erstreckt. Bei den bekannten Büchsenherstellverfahren werden die Längsränder der rechteckigen Platte zurückgebogen, so daß sie U-förmige, sich in Längsrichtung erstreckende Kanten bilden, die dann miteinander verhakt werden, wenn die Platte zu einem Zylinder geformt, gefalzt und verlötet wird. Ein solcher Lötfalz ist viermal so dick wie die Seitenwand des Behälters.

Nach der Erfindung wird der Längsfalz durch Widerstandsschweißung der einfach übereinandergelegten Längsränder der rechteckigen Platte gebildet. Die Überlappung wird hierbei in vorteilhafter Weise auf einen kleinstmöglichen Wert gebracht, der 0,4 mm nicht überschreitet. Wenn die Überlappenden Ränder durch Widerstandsschweißung verbunden werden, wird die Dicke der Schweißverbindung so gesteuert, daß sie weniger als die doppelte Dicke des Metalles der Behälterseitenwand und vorzugsweise etwa das Anderthalbfache dieser Dikke beträgt. Auf diese Weise wird ein Längsfalz von nur etwa 0,4 mm Breite gebildet und dieser Längsfalz ist nur etwa 1,5mal so dick wie das Metallblech, wobei unter dem Gesichtspunkt der Dichtheit auch kaum ein Riß zu erwarten ist.

Der kegelstumpfförmige Teil 24 ist in Fig. 2 dargestellt.

Wendet man sich nun Fig. 2 zu, so erkennt man, daß das offene Ende 15 der Seitenwand 14 zu einem kreisförmigen Wulst 80 mit einem vorher bestimmten Radius $R_1$ gerollt ist. Von diesem kreisförmigen Wulst 80 hängt ein sich in Längsrichtung erstreckendes Dichtsegment 83 herab, das parallel zu dem zylindrischen Körperteil 22 verläuft und mit einem vorher bestimmten Abstand radial einwärts von diesem angeordnet ist. Der kreisförmige Wulst 80 ist in der dargestellten Richtung gerollt, wobei sein freier Rand 85 gegen die Außenfläche des Dichtsegmentes 83 gerichtet ist, um eine Bewegung oder Biegung des kreisförmigen Wulstes 80 zu ermöglichen, wenn die ringförmige Dichtnute 30 des Deckels 12 in abdichtende Verbindung mit dem kreisförmigen Wulst 80 und dem Dichtsegment 83 gedrückt wird. Ein im allgemeinen kegelstumpfförmiges, quer verlaufendes Segment 86 hängt an dem Dichtsegment 83 und erstreckt sich bis zum Ende des zylindrischen Körperteiles 22, mit dem es längs der Linie 25 verbunden ist. Das quer verlaufende Segment 86 zusammen mit der Biegsamkeit des zylindrischen Körperteiles 22 schafft die radial ausbiegbaren Mittel, die die Abdichtung zwischen dem kreisförmigen Wulst 80 und der Dichtnute 30 für den Fall aufrechtzuerhalten gestatten, daß der Container einer Stoßbelastung unterworfen wird. Hierbei ist die Biegsamkeit des Randteiles 24 unter anderem eine Funktion des Winkelverhältnisses zwischen dem Übergangssegment 86 und dem Abdichtsegment 83 und dem zylindrischen Körperteil 22. Gute Ergebnisse wurden mit einem Winkelverhältnis von etwa 30° erreicht, obgleich Fachleuten verschiedene Abwandlungen offensichtlich sein werden. Es sollte auch darauf hingewiesen werden, daß dieser Winkel über den Abstand des quer verlaufenden Segmentes 86 so gewählt ist, um das oben erläuterte Stapelkonzept zu ermöglichen.

Eine erhebliche Vergrößerung des Kegelstumpfwinkels kann zu einer Abwärtsverformung des Randteiles 24 in Längsrichtung führen, wenn der Deckel 12 über den kreisförmigen Wulst 80 gestülpt wird. Um den Randteil 24 gegen solche Längsverformungen zu versteifen, sind in dem Quersegment 86 drei Ausbuchtungen oder Vorsprünge 90, 91 und 92 vorgesehen. Man nimmt an, daß mindestens zwei solcher Vorsprünge erforderlich sind. Zwischen den Vorsprüngen 90, 91 und 92 hat das Quersegment 86 kegelstumpfförmige Wandteile 95 bzw. 96 bzw. 97, wobei diese kegelstumpfförmigen Wandteile 95, 96 und 97 im wesentlichen parallel zueinander verlaufen, um das gewünschte, in der Zeichnung dargestellte Biegeverhältnis von 30° beizubehalten. Der erste Vorsprung 90 erstreckt sich in Durchmesserrichtung nicht über den dritten Vorsprung 92 hinaus und dient als Hebelansatzpunkt für ein blattförmiges Werkzeug, das zwischen den Randteil 24 und den Wulst 40 des Deckels eingeführt wird, so daß der Deckel 12 vom Behälter 10 abgehoben werden kann. Der dritte Vorsprung 92 dient auch als Anschlag oder Führung für den Rand eines Etiketts, das auf den zylindrischen Körperteil 22 aufgebracht wird. Der dritte Vorsprung springt in Durchmesserrichtung annähernd ebenso weit vor wie der Doppelfalz 20 und erlaubt dem Behälter 10, in einer geraden Linie zu rollen, so daß Etiketten mit konventionellen Etikettiermaschinen auf den zylindrischen Körperteil 22 aufgebracht werden können, wenn die Deckel 12 noch nicht eingesetzt sind. Die Vorsprünge 90 bis 92 versteifen das Quersegment 86 gegen Längsverbiegung, wenn auf den Deckel 12 eine Kraft ausgeübt wird, um den Deckel 12 am Behälter 10 abdichtend zu befestigen.

Fig. 3 zeigt einen am Behälter 10 befestigten Deckel 12. In einer nicht zusammengesteckten oder "freien" Lage ist der Radius $R_1$ des kreisförmigen Wulstes 80 vorzugsweise ebenso groß oder geringfügig größer als der Radius $R_2$, der zu dem Durchmesser gehört, welcher den Abstand zwischen der inneren Dichtwand 34 und der äußeren Dichtwand 35 der Dichtnute 30 des Deckels 12 bildet, so daß ein geeigneter Festsitz hergestellt wird. In nicht zusammengefügtem Zustand ist der durch den Mittelpunkt des Krümmungsradius $R_2$ gehende Durchmesser der Einbuchtung 37, welcher dem lichten Abstand der Dichtwände 34 und 35 entspricht, ebenso groß oder geringfügig kleiner als der Außendurchmesser des kreisförmigen Wulstes 80, wobei die Durchmesserdifferenz etwa 0,23 mm (0,009″) beträgt. Wenn der Deckel 12 über den kreisförmigen Wulst 80 gedrückt wird, hat der freie Rand 85 des kreisförmigen Wulstes 80 die Neigung, sich enger zusammenzurollen, während das Quersegment 86 des Randteiles 24 geringfügig nach außen gedrückt wird. Hierdurch wird ein sehr dichter Festsitz zwischen dem Dichtsegment 83 des Randteiles 24 und der inneren Dichtwand 34 auf deren gesamter Länge und ein schmaler Kontaktbereich (meist nur ein Linienkontakt) zwischen der äußeren Dichtwand 35 und dem kreisförmigen Wulst 80 erreicht. Auf diese Weise wird die störende Wirkung der Seitenwandnaht 60 vermieden, die sich um den kreisförmigen Wulst 80 erstreckt und hier eine Eindrückung bildet und die bisher eine luftdichte Abdichtung von ringlosen Containerdeckeln verhinderte. Die Wirkung dieses Seitenwandfalzes wird vielmehr durch die federnd nachgiebige Zusammenbiegung des kreisförmigen Wulstes 80 kompensiert, wenn der Deckel 12 am Behälter befestigt wird.

Zwischen dem Scheitel des kreisförmigen Wulstes 80 und der Einbuchtungswand 37 des Deckels 12 kann ein bekanntes Dichtmittel angeordnet werden, wenn der Behälter mit extrem flüssigen oder wässrigen Substanzen, wie Beize od.dgl., gefüllt werden soll.

Die ringlosen Farbbehälter nach dem Stande der Technik, die oben erwähnt wurden, haben einige strukturelle Abwandlungen, um den Randteil des Behälters in Seiten- oder Radialrichtung zu versteifen. Bei den Behältern nach dem US-A-1 419 314 von Sexton und US-A-2 060 504 von Kjellstrom ist der Rand selbst umgebogen und bildet eine U-förmige Öffnung, deren Schenkel ein Stück weit herabreichen und zusammen mit einer Einbuchtung zur Bildung einer steifen Öffnung ausreichen. Bei der Ausführungsform nach Burdick ist die Öffnung wie bei der vorliegenden Erfindung zu einem Wulst gerollt. Die Behälterseitenwand ist jedoch unmittelbar unterhalb der gerollten Öffnung kräftig gefalzt oder auf sich selbst zurückgebogen, um die Mundöffnung zu versteifen, wobei gleichzeitig die Containerseitenwand versteift wird. Tatsächlich ist bei den bekannten ringlosen Behältern der Randteil des Behälters modifiziert, um die Behälteröffnung zu versteifen und auf diese Weise die Steifigkeit des Ringes wieder zu erreichen, der bei dieser Ausbildung fortgelassen wurde.

Im Gegensatz hierzu ist bei der vorliegenden Erfindung die Seitenwand und der Randteil nicht versteift. Obgleich das genaue Zusammenwirken zwischen Deckel 12 und Behälter 10 nicht vollständig klar ist, haben Fallversuche, bei denen der Behälter auf seinen Boden 18 oder auf den Rand des Bodens 18 fallengelassen wurde, gezeigt, daß die dargestellte Form bessere Rückhaltecharakteristiken für den Deckel 12 zeigt, als dies bei konventionellen Ringdeckelausführungen oder bei bekannten ringlosen Behältern der Fall ist. Ferner zeigten sich die in den Fallversuchen untersuchten Abdichtkräfte so lange, bis die Seitenwand 22 so weit physisch zerstört war, daß der Randteil 24 dauerhaft verzogen war. Diese Dichteigenschaft ist wahrscheinlich nur in zweiter Linie dem Festsitz zwischen dem Deckel 12 und dem Randteil 24 zuzuschreiben. Im Gegensatz hierzu ist anzunehmen, daß der Festsitz in erster Linie für den mit Luftdruck durchgeführten Deckelabhebetest Bedeutung hat und bei der Enduntersuchung auf eine Kraft begrenzt ist, die von dem Benutzer der Dose leicht überwunden werden kann, der den Deckel 12 abnehmen und wieder aufdrücken muß.

Man nimmt an, daß die Farbe oder Flüssigkeit im Inneren des Behälters auf einen begrenzten Bereich der Innenseite des Deckels 12, dessen Lage von der Stellung der Büchse beim Stoß bestimmt wird, eine exzentrische Kraft ausübt, wenn der Behälter einer solchen Stoßbelastung unterworfen wird. Diese Kraft wird gleichzeitig auf einen bestimmten Teil des Quersegmentes 86 übertragen. Man nimmt an, daß der Stoß hierbei zu einem guten Teil von der Ausbiegung des Quersegmentes 86 zusammen mit einer Ausbiegung des zylindrischen Körperteiles 22 und einer Ausbiegung der im wesentlichen flachen Grundplatte 29 des Deckels 12 aufgenommen wird, bevor ihre aufwärts gerichtete Hebelvektorkomponente groß genug ist, um die durch den Festsitz zwischen ringförmiger Dichtnute 30 und kreisförmigem Wulst 80 hergestellte Dichtung aufzuheben.

Mehr im einzelnen bedeutet dies, daß der Festsitz zwischen dem Deckel 12 und dem kreisförmigen Wulst 80 eine Kraft 100 erzeugt, die normal zur inneren Dichtwand 34 und dem Dichtsegment 83 gerichtet ist und eine Kraft 101 ausübt, die längs einer Linie oder eines schmalen Kontaktbereiches zwischen der äußeren Dichtwand 35 und dem kreisförmigen Wulst 80 wirksam ist. Die Normalkräfte 100 und 101 erzeugen eine Reibungskraft, die überwunden werden muß, um den Deckel 12 abzuheben. Wenn der Behälter 10 auf seinen Rand fällt, wird die Kraft der Flüssigkeit, die allgemein durch den Vektor 105 dargestellt worden ist, teilweise auf das Quersegment 86 übertragen, welches sich hierdurch biegen oder verformen will, um einen Teil der Flüssigkeitskraft 105 zu absorbieren oder verschwinden zu lassen, die sonst den Deckel 12 abspringen läßt. Gleichzeitig wirkt die Ausbiegung des Quersegmentes 86 nicht widrig, um die Festsitzkräfte 100 und 101 zwischen dem kreisförmigen Wulst 80 und der Dichtnute 30 aufzuheben. Dies ist eine vollständig andere Aktion und Reaktion als diejenige, die bei dem bekannten Festsitz auftritt, wie er bei einer Ringdeckelkonstruktion verwirklicht ist. Diese bekannten ringlosen Formen benutzen keinen flexiblen Rand, um die Dichtung aufrechtzuerhalten. Obgleich die Biegsamkeit der Behälterausführung nach der vorliegenden Erfindung größenmäßig nicht angegeben werden kann, ist sie der Ausgestaltung doch eigentümlich. Aus diesem Grunde könnte die Blechdicke ebenso wie der Festsitz zwischen Deckel 12 und Randteil 24 auch vergrößert werden und das Quersegment 86 könnte auch gerade gemacht werden (wobei das Stapeln und Rollen des Behälters 10 verhindert wäre) und die dargestellte Form wird noch immer etwas Flexibilität in der Seitenwand 22 und dem Deckel 12 aufweisen, um die Abdichteigenschaften zu verbessern.

Der bei der Erfindung von Natur aus vorhandene, sich in Längsrichtung erstreckende Seitenwandfalz berührt ebenfalls die Abdichtanordnung nach der Erfindung. Wie oben angedeutet, könnte der Randteil 24 innerhalb seiner Toleranz nicht genau gezogen werden, wenn versucht wurde, den Behälter in seine vorliegende Form ohne einen Längsfalz zu ziehen. Aus diesem Grunde ist ein sich in Längsrichtung erstreckender Seitenfalz erforderlich. Wenn der Seitenfalz ein üblicher, gelöteter Seitenfalz ist, würde seine Dicke, die bis zum Vierfachen der Wanddicke betragen würde, die Abdichtung am kreisförmigen Wulst 80 nachteilig beeinflussen und verhindern, daß der Randteil 24 in seine gewünschte Form gerollt werden kann. Aus diesem Grunde wird der Seitenfalz durch Widerstandsschweißung hergestellt mit einer genau gesteuerten Überlappung von nicht mehr als etwa 1 mm (0,04″), um einen Falz herzustellen, der nach seiner Verschweißung annähernd das Anderthalbfache der Wanddicke um nicht mehr als 0,04 mm überschreitet. Der Randteil 24 wird dann in mehreren Schritten in seine dargestellte Form gewalzt, wobei seine Dicke auf im wesentlichen der ganzen Fläche beibehalten wird. Insbesondere wird ein Einschnüren des Halsteiles 24 vermieden, weil es unmöglich ist, Abmessungstoleranzen und eine Reduzierung und eine damit einhergehende Schwächung in der Wanddicke einzuhalten. Es wird deshalb angenommen, daß bei Verwendung eines sich in Längsrichtung erstreckenden, durch Widerstandsschweißung geschlossenen Seitenfalzes mit einer minimalen Überlappung und eines nicht gezogenen oder eingeschnürten, sondern gerollten Randteiles 24 eine annehmbare Dichtung hergestellt werden kann, die nicht die widrigen Eigenschaften hat, die sonst einem durch Widerstandsschweißung hergestellten Längsseitenfalz anhaften.

Eine andere Ausführungsform der Erfindung ist in Fig. 4 dargestellt, wobei gleiche Bezugszeichen gleiche Teile bezeichnen, wo dies möglich ist. Diese andere Ausführungsform hat eine nach innen vorspringende Nute oder Verriegelungseindrückung 110 in der äußeren Ringwand 35 des Deckels 12. Die übrige geometrische Form des Containers 10 und des Deckels 12 bleibt die gleiche. Man erkennt, daß die Verriegelungseindrückung 110 den kreisförmigen Wulst 80 unter dem Krümmungsmittelpunkt seines Bogens mit dem Radius $R_1$ untergreift und eine einschnappende Zwangsverbindung herstellt, wenn der Deckel 12 auf den Container 10 abdichtend aufgedrückt wird. Außerdem wird der Abdichtbereich zwischen der äußeren Ringwand 35 und dem kreisförmigen Wulst 80 vergrößert. Hierdurch wird bei der alternativen Ausführungsform nach Fig. 4 ein festerer Verschluß erzeugt als bei der bevorzugten Ausführungsform. Die Ausführungsform nach Fig. 4 ist als eine alternative Ausführungsform gezeigt, weil sie ein zusätzliches Werkzeug erfordert oder weil beim Herstellprozeß ein zusätzlicher Walzschritt ausgeführt werden muß, der für die meisten Anwendungen nicht für notwendig gehalten wird. Bei bestimmten dickwandigen Behältern jedoch, beispielsweise bei Containern mit 19 l (fünf Gallonen) Fassungsvermögen u.dgl., oder dort, wo die widrige Wirkung des geschweißten Längsseitenfalzes bedeutsam wird, kann die Ausführungsform nach Fig. 4 verwendet werden.

Die hun beschriebene Erfindung wurde, unter Bezugnahme auf zylindrische Metallbehälter offenbart und erläutert, bei denen die Erfindung mit besonderem Vorteil angewendet werden kann. Es könnte jedoch auch ein herabgezogener Rand und ein Deckel auf eine zylindrische Öffnung gedrückt werden, die in einem länglichen oder F-förmigen Behälter mit rechteckigem Oberteil angebracht ist. Ferner wurde die Erfindung unter Bezugnahme auf Farbbehälter beschrieben, bei denen sie insbesondere angewendet wird. Der Behälter ist aber natürlich auch für andere Zwecke, beispielsweise für Kaffeedosen, Erdnußdosen u.dgl. verwendbar, wo die Wiederverschließeigenschaften des Behälters und das Stapelmerkmal Bedeutung gewinnen.

Es ist deshalb das Wesentliche der Erfindung, einen ringlosen Behälter mit einem abnehmbaren, wieder verschließbaren Deckel zu schaffen, der einen besonders ausgestalteten Öffnungsrand hat, um einen wirksamen Behälterdeckelverschluß herzustellen.

## Patentansprüche

1. Metallbehälter mit abnehmbarem Deckel und einem kreisförmigen Boden (16), einem mit dem Boden verbundenen zylindrischen Körperteil (22) und einem hieran anschließenden verformten Randteil (24), in dem die Behälteröffnung (15) angeordnet ist, die einen gerollten Wulstrand (80) hat, über welchen der Deckel (12) mit einer U-förmigen Verschlußnute (30) greift, die von einer inneren Dichtwand (34), einer äußeren Dichtwand (35) und von einer diese verbindenden Einbuchtungswand (37) begrenzt wird, **dadurch gekennzeichnet, daß** der verformte Randteil (24) ein kegelstumpfförmiges Segment (86) aufweist, das sich radial nach innen zur Behälteröffnung (15) hin verjüngt und mit Versteifungsmitteln (90, 91, 92) versehen ist.

2. Behälter nach Anspruch 1, **dadurch gekennzeichnet,** daß das kegelstumpfförmige Segment (86) als Versteifung mindestens zwei Vorsprünge (90,91,92) aufweist.

3. Behälter nach Anspruch 2, **dadurch gekennzeichnet,** daß das Segment (86) zwischen den Vorsprüngen. (90,91 bzw. 91,92) kegelstumpfförmige Wandteile (95 bzw. 96 bzw. 97) aufweist, die unter einem Winkel von etwa 30° im wesentlichen parallel zueinander verlaufen.

4. Behälter nach einem der Ansprüche 1 bis 3, **dadurch gekennzeichnet,** daß die miteinander verbundenen Ränder des Bodens (16) und der Seitenwandung (14) des zylindrischen Körperteiles (22) einen über den Außenumfang des Körperteiles radial vorspringenden Falz (20) bilden und daß einer der Vorsprünge (90 bis 92) des kegelstumpfförmigen Segments um den gleichen Betrag über den Außenumfang radial vorspringt und daß der äußere Umfangsrand (31) des Deckels (12) um einen Betrag radial nach außen über den Außenumfang vorspringt, der nicht größer ist als der des Vorsprunges (92) am kegelstumpfförmigen Segment, so daß der Behälter in einer geraden Linie rollt, wenn er auf der Seite liegt.

5. Behälter nach einem der Ansprüche 1 bis 4, **dadurch gekennzeichnet,** daß der Behälter aus Blech gerollt ist, und daß seine Seitenwandung (14) einen durch Widerstandsschweißung erzeugten, sich in Längsrichtung erstreckenden durchlaufenden Seitenfalz aufweist, dessen Dikke kleiner ist als die doppelte Dicke der Seitenwand (14).

6. Behälter nach einem der Ansprüche 1 bis 5, **dadurch gekennzeichnet,** daß die Bodenwand (18) des Behälters eine ringförmige Nute aufweist, deren nach einem umgekehrten U geformte Vertiefung geringfügig größer ist als die nach einem umgekehrten U geformte Verschluß-Nute (30) im Deckel (12), so daß Behälter mit oder ohne daran befestigtem Deckel reihenweise übereinandergestapelt werden können.

7. Behälter nach einem der Ansprüche 1 bis 6, **dadurch gekennzeichnet,** daß der Durchmesser der äußeren Dichtwand (35) des Deckels (12) geringfügig kleiner ist als der Innendurchmesser des Bodens (16), um die Behälter reihenweise einen über den anderen derart zu stapeln, daß die Einbuchtungswand (37) des Deckels (12) des Bodens (16) in die Vertiefung eingreift.

8. Behälter nach einem der Ansprüche 1 bis 7, **dadurch gekennzeichnet,** daß die äußere Dichtwand (35) des Deckels (12) eine radial nach innen geformte Eindrückung (110) aufweist, welche den Wulstrand (80) des Behälters hintergreifen kann, wenn der Deckel (12) auf dem Behälter (10) in Stellung gebracht wird und einschnappt, und wodurch der Durchmesser des Wulstrandes (8) geringfügig verkleinert wird.

9. Behälter nach einem der Ansprüche 1 bis 8, **dadurch gekennzeichnet,** daß die innere Dichtwand (34) des Deckels (2) in einer kontinuierlichen Dichtverbindung mit dem Dichtsegment (83) des Behälters (10) steht, das sich an das kegelstumpfförmige Segment (86) des Behälters (10) unmittelbar anschließt und das sich in den Wulstrand (80) des Behälters (10) fortsetzt.

## Claims

1. A metal container with a removable lid and a circular base (16), with a cylindrical body portion (22) attached to the base and with a curled rim portion (24) attached to the cylindrical body portion, in which rim portion the container opening (15) is disposed, which container opening has a curled beaded rim (80), with which the lid (12) engages by means of a U-shaped sealing groove (30), which sealing groove is defined by an inner sealing wall (34), an outer sealing wall (35), and by a bight wall (37) connecting these sealing walls, characterised in that the curled rim portion (24) has a frusto-conical segment (86) which tapers radially inwards towards the container opening (15) and which is provided with rigidizing means (90, 91, 92).

2. A container according to Claim 1, characterised in that the frusto-conical segment (86) has at least two protrusions (90, 91, 92) for rigidizing.

3. A container according to Claim 2, characterised in that the segment (86) has frusto-conical wall portions (95 or 96 or 97) between the protrusions (90, 91 or 91, 92) which are essentially parallel to each other at an angle of about 30°.

4. A container according to one of Claims 1 to 3, characterised in that the edges of the base (16) and the sidewall (14) of the cylindrical body portion (22), which are attached to each other, form a seam (20) projecting radially outwards beyond the outer periphery of the body portion (22) and that one of the protrusions (90 or 92) of the frusto-conical segment projects radially beyond the outer periphery by the same amount and that the outer peripheral edge (31) of of the lid (12) projects radially outwards beyond the outer periphery by an amount which is not greater than that of the protrusion (92) on the frusto-conical segment, so that the container rolls in a straight line when lying on its side.

5. A container according to one of Claims 1 to 4, characterised in that the container is rolled from sheet metal, and that its sidewall (14) has a side seam produced by resistance welding and extending in the longitudinal direction, the thickness of which is less than the double thickness of the sidewall (14).

6. A container according to one of Claims 1 to 5, characterised in that the bottom wall (18) of the container has an annular groove, the recess of which, which is formed as an inverted U, is slightly larger than the sealing groove (30) formed as an inverted U in the lid (12), so that containers with or without lids secured to them can be stacked serially one on top of the other.

7. A container according to one of Claims 1 to 6, characterised in that the diameter of the outer sealing wall (35) of the lid (12) is slightly less than the internal diameter of the base (16), in order to stack the containers serially one on top of the other in such a way that the bight wall (37) of the lid (12) engages in the recess in the base (16).

8. A container according to one of Claims 1 to 7, characterised in that the outer sealing wall (35) of the lid (12) has a locking indentation (110) formed projecting radially inwards which can engage the beaded rim (80) of the container when the lid (12) is placed in position on the container (10) and snapped on, and due to which the diameter of the beaded rim (80) is slightly reduced.

9. A container according to one of Claims 1 to 8, characterised in that the inner sealing wall (34) of the lid (12) has a continuously sealed connection to the sealing segment (83) of the container (10), which sealing segment directly adjoins the frusto-conical segment (86) of the container (10) and extends into the beaded rim (80) of the container (10).

**Revendications**

1. Récipient métallique avec un couvercle amovible et un fond circulaire (16), une partie de corps (22) cylindrique, reliée au fond, et une partie de bordure (24) déformée, qui s'y raccorde et dans laquelle est disposée l'ouverture de récipient (15) dotée d'une bordure à bourrelet (80) roulée, sur laquelle s'engage le couvercle (12), par une gorge de fermeture (30) en forme de U, délimitée par une paroi d'étanchéité intérieure (34), une paroi d'étanchéité extérieure (35) et une paroi d'emboîtement (37) qui les relie, caractérisé en ce que la partie de bordure (24) déformée présente un segment (86) tronconique qui s'effile radialement vers l'intérieur, en direction de l'ouverture de récipient (15) et est pourvu de moyens de rigidification (90,91,92).

2. Récipient selon la revendication 1, caractérisé en ce que le segment tronconique (86) présente au moins deux saillies (90,91,92) de rigidification.

3. Récipient selon la revendication 2, caractérisé en ce que le segment (86) présente entre les saillies (90,91, respectivement 91,92) des parties de paroi (95, respectivement 96 respectivement 97) tronconiques, qui s'étendent, pratiquement parallèlement les unes aux autres, en faisant un angle d'à peu près 30°.

4. Récipient selon l'une des revendications 1 à 3, caractérisé en ce que les bordures, reliées entre elles, du fond (16) et de la paroi latérale (14) de la partie de corps cylindrique (22) forment un pli (20) qui fait saillie radialement, au-dessus de la périphérie extérieure de la partie de corps et en ce que l'une des saillies (90 à 92) du segment tronconique fait saillie radialement de la même distance au-dessus de la périphérie extérieure et en ce que la bordure périphérique extérieure (31) du couvercle (12) fait saillie radialement au-dessus de la périphérie extérieure, d'une distance qui n'est pas supérieure à celle de la saillie (92) située sur le segment tronconique, de sorte que le récipient roule en ligne droite lorsqu'il se trouve sur le côté.

5. Récipient selon l'une des revendications 1 à 4, caractérisé en ce que le récipient est obtenu par roulage, en tôle, et en ce que sa paroi latérale (14) présente un pli latéral, continu sur la direction longitudinale, produit par la soudure par résistance, pli latéral dont l'épaisseur est inférieure au double de l'épaisseur de la paroi latérale (14).

6. Récipient selon l'une des revendications 1 à 5, caractérisé en ce que la paroi de fond (18) du récipient présente une gorge annulaire, dont la cavité, en forme de U inversé, est légèrement plus grande que la gorge de fermeture (30), en forme de U inversé, située dans le couvercle (12), de sorte que les récipients peuvent être empilés les uns au-dessus des autres par lots, avec ou sans couvercle fixé dessus.

7. Récipient selon l'une des revendications 1 à 6, caractérisé en ce que le diamètre de la paroi d'étanchéité extérieure (35) du couvercle (12) est légèrement inférieur au diamètre intérieur du fond (16), pour pouvoir empiler les récipients les uns sur les autres par lots, de façon que la paroi d'emboîtement (37) du couvercle (12) du fond (16) vienne en contact dans la cavité.

8. Récipient selon l'une des revendications 1 à 7, caractérisé en ce que la paroi d'étanchéité extérieure (35) du couvercle (12) présente une empreinte (110) formée radialement vers l'intérieur, qui peut s'accrocher derrière la bordure de bourrelet (80) du récipient, lorsque le couvercle (12) est mis en position sur le récipient (10) et encliqueté, et faisant que le diamètre de la bordure de bourrelet (80) est légèrement réduit.

9. Récipient selon l'une des revendications 1 à 8, caractérisé en ce que la paroi d'étanchéité intérieure (34) du couvercle (2) est en liaison d'étanchéité continue avec le segment d'étanchéité (83) du récipient (10), qui se raccorde directement au segment tronconique (86) du récipient (10) et se prolonge dans la bordure de bourrelet (80) du récipient (10).

# FIG. 1

FIG. 2

FIG. 3

FIG. 4